# EUROPEAN PATENT APPLICATION

(11) **EP 1 867 666 A1**
(43) Date of publication of application: **19.12.2007**
(21) Application number: 06730170.5
(22) Date of filing: 28.03.2006
(51) Int. Cl.: C08F 220/18, C08F 212/32, C08F 297/02, G01N 30/88

(54) **OPTICALLY ACTIVE COPOLYMER, PROCESS FOR PRODUCING THE SAME, AND PACKING FOR CHROMATOGRAPHY COMPRISING THE COPOLYMER**

(30) Priority: 07.04.2005 JP 2005110859
(71) Applicant: Nara Institute of Science and Technology, Ikoma-shi, Nara 630-0101 (JP); Japan Science and Technology Agency, Kawaguchi-shi, Saitama 332-0012 (JP)
(72) Inventor: NAKANO, Tamaki, Nara 6310805 (JP); YAEGASHI, Takayuki, Nara 6310023 (JP); TUJI, Masashi, Aichi 4640823 (JP)
(74) Representative: Solf, Alexander
(86) International application number: PCT/JP2006/306222
(87) International publication number: WO 2006/109560

(57) **Abstract**

The present invention is an optically active copolymer represented by the following Structural Formula 1, obtained by copolymerizing a bulky methacrylate ester which gives a spiral polymer when homopolymerization is performed, with a 1,1-aromatic ring-substituted ethylene monomer having a polymerizable exomethylene group, a method of manufacturing the same, and a filler for optical isomer separation chromatography using this copolymer.
Structural Formula 1: 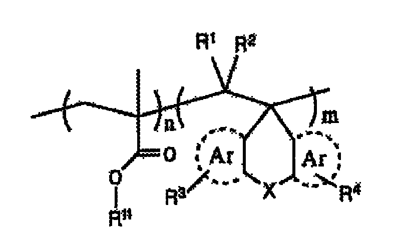 where, Ar in the formula is an aromatic ring, R¹ and R² are hydrogen atoms, organic groups or hetero atoms, R³ and R⁴ are hydrogen atoms, hetero atoms or organic groups, and R¹¹ is a triarylmethyl group which may have a crosslinked structure, m and n are integers equal to 2 or more, -X- is -(CH₂)q-, an aromatic group, a vinyl group, a hetero atom or a group containing a hetero atom, and q is an integer equal to 0 or more.

The copolymer of the present invention has a satisfactory ability to withstand solvolysis, is useful as a stationary phase for chromatography, a polarized light-absorbing material/luminescent material and a charge transport material, and also has a superior chiral recognition ability.

## Description

### Field of the Invention

The present invention relates to a polymer having an aromatic group such as a fluorene residue in a side chain, and in particular to a chiral copolymer having a spiral structure useful as a stationary phase for chromatography, a polarized light-absorbing material/luminescent material and a charge transport material, to a method of manufacturing the same, and to a stationary phase material for chromatography using this copolymer.

### Background of the Invention

Spiral optically active polymethacrylic acid esters having a chiral recognition function are known in the art (Patent document 1). However, these polymers easily undergo solvolysis with methanol, and they had insufficient durability for use as a stationary phase in chromatography. This disadvantage was improved by a polydibenzofulvene derivative having a spiral structure which exhibited chiral recognition ability (Patent document 2). However, the chiral recognition ability of the derivative was poor, and it was not satisfactory for use as a stationary phase for chromatography. A copolymer of a bulky methacrylate ester with a dibenzofulvene derivative has not been disclosed in the art.
Patent document 1: Patent No. 3184620
Patent document 2: WO03/102039 A1

The investors performed a detailed search for a polymer which could sufficiently withstand solvents, had a high chiral recognition ability, and was suitable for use as a stationary phase in chromatography. We discovered that a copolymer of a bulky methacrylate ester and a dibenzofulvene derivative was satisfactory for this purpose, and thereby arrived at the present invention.

### SUMMARY OF THE INVENTION

### Problems to be Solved by the Invention

It is therefore a first object of the present invention to provide a novel copolymer having sufficient ability to withstand solvolysis, and which is useful as a stationary phase for chromatography, a polarized light-absorbing/luminescent material, and a charge transport material.
It is a second object of the present invention to provide a method of manufacturing a novel block copolymer having a superior chiral recognition ability.
It is a third object of the present invention to provide a filler for optical isomer separation chromatography having a superior ability to withstand solvolysis and a superior chiral recognition ability.

### Means for Solving the Problems

Above various objects of the present invention are achieved by an optically active copolymer represented by the following Structural Formula 1, obtained by copolymerizing a bulky methacrylate ester which gives a spiral polymer when homopolymerization is performed, together with a 1,1-aromatic ring-substituted ethylene monomer having a polymerizable exomethylene group, and in particular by a method of manufacturing a block copolymer having a superior chiral recognition ability, and by a filler for optical isomer separation chromatography using this optically active copolymer. Structural Formula 1:

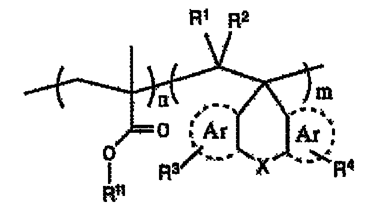

### Advantages of the Invention

Since the copolymer of the present invention has both an ability to withstand solvolysis and a chiral recognition ability which were mutually unattainable according to the prior art, it is particularly suitable as a chiral stationary phase for supercritical fluid chromatography (SFC), and as a chiral stationary phase for high-speed liquid chromatography.

### BRIEF DESCRIPTION OF THE DRAWINGS

FIG. 1 shows GPC curves (a) for a TrMA homopolymer (prepolymer) obtained in Experiment 132-2, (b) for a TrMA-DBF block copolymer, and (c) for a component obtained by separating the TrMA-DBF block copolymer with a benzene-hexane (7/3) mixed solvent.
FIG. 2 shows SEC curves for each deposited material obtained by completely dissolving the polymer obtained with YAE615 in benzene, depositing a condensate by adding hexane to the solution, and repeating the same operation on the deposited condensate twice.
FIG. 3 is a "time-conversion rate curve" of the solvolysis reaction at 60** of poly (PDBSMA), a material containing 30% poly(PDBSMA-6-DBF) condensate, and a material containing 90% poly(PDBSMA-DEF) condensate.

### DETAILED DESCRIPTION OF THE PREFERRED EMBODIMENTS

The optically active copolymer represented by the following Structural Formula 1 in the present invention may be any random copolymer, block copolymer or graft copolymer, but it is preferably a block copolymer obtained by combining, in the form of a copolymer, a spiral polymethacrylic acid ester part having sufficient chiral recognition ability but insufficient ability to withstand solvolysis, together with a polydibenzofulvene derivative part having a high ability to withstand solvolysis but low chiral recognition ability, this copolymer having the advantages of both.

Structural Formula 1 : 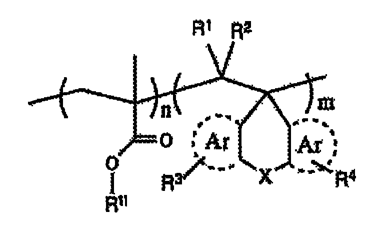 where, Ar in the formula is an aromatic ring, R¹, R² are hydrogen atoms, organic groups or hetero atoms. R³, R⁴ are hydrogen atoms, hetero atoms or organic groups, whereof 2-4 thereof may be introduced respectively. R³, R⁴ in this case may be identical or different. R¹¹ is a triarylmethyl group which may have a crosslinked structure, m and n are integers equal to 1 or more, -X-is -(CH₂)q-, an aromatic group, a vinyl group, a hetero atom or a group containing a hetero atom, and q is an integer equal to 0 or more. X may be all identical or different, but all of X are preferably single bonds (i.e., q is 0).

Structural Formula 1 when all of X are single bonds becomes the following Structural Formula 2.
Structural Formula 2: 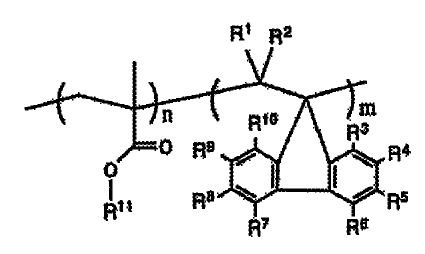 where, R¹, R², R¹¹, m, and n are identical to those in Structural Formula 1, and R³-R¹⁰ are identical to R³, R¹ of Structural Formula 1.

The methacrylate ester used in the present invention must be a bulky methacrylate ester which gives a spiral polymer when homopolymerization is performed, and it preferably has a triarylmethyl group such as triphenylmethyl, or a triarylmethyl group having a crosslinked structure. The obtained spiral polymer may also have a crosslinked structure in the side chain.

Examples of the aforesaid triarylmethyl group are the following:

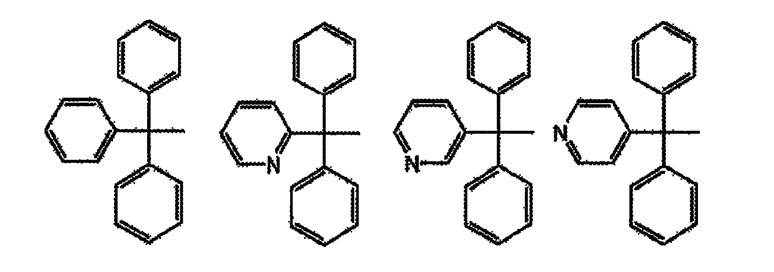

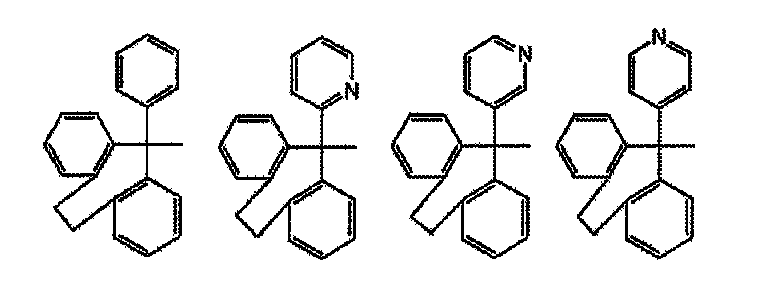

On the other hand, the 1,1-aromatic ring-substituted ethylene monomer having a polymerizable exomethylene group which is copolymerized with the aforesaid methacrylate ester, may be represented as follows:

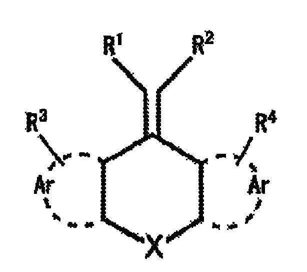

The aforesaid Ar is an aromatic ring, and R¹, R² are hydrogen atoms, organic groups or hetero atoms. They are preferably hydrogen atoms, alkyl groups, aromatic groups, -CN or ester groups, and more preferably hydrogen atoms, alkyl groups having 1-10 carbon atoms, phenyl groups or -CN.
-X- is a group of - (CH₂) q-, an aromatic group, a vinyl group, a hetero atom or a group containing a hetero atom, and q is an integer equal to 0 or more. When X is a hetero atom such as -O-, -S- or the like, the group containing a hetero atom may for example be -NR-, -C(O)-, or the like. In addition, in the present invention, q is preferably 0, i.e., X is preferably a single bond.

R³, R⁴ are hydrogen atoms, hetero atoms or organic groups, and 2-4 thereof may be introduced, respectively. R³, R⁴ in this case may be identical or different. As examples of R³, R⁴ when they are organic groups, there may be mentioned an alkyl group, aromatic group, carboxyl group, ester group, ether group or a functional group having an urethane bond, a halogen atom, a functional group bonded to an aromatic group by a hetero atom, -CN and -(C=O)R. Here, the hetero atom is N, S or o atom. In the present invention, a hydrogen atom, alkyl group having 1-20 carbon atoms, aromatic group having 6-30 carbon atoms, carboxyl group, ester group having 2-30 carbon atoms, ether group having 2-30 carbon atoms, functional group with an urethane bond having 2-30 carbon atoms, F, Cl, Br, I, -NRR', -SR-, -OR, -NO₂, -CN, or the following group, are preferred. Here, R and R' are hydrogen atoms, hetero atoms or organic groups. 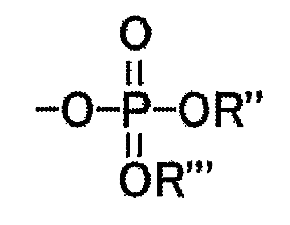 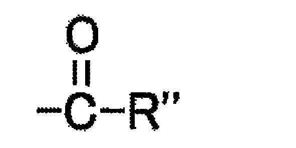 where, R", R"' are hydrogen atoms or organic groups.
R³, R⁴ may also be optically active functional groups, 2-4 of R³, R⁴ may be introduced, respectively. In this case, R³, R⁴ may be identical or different.

In manufacturing the copolymer of the present invention, the 1,1-aromatic ring-substituted ethylene monomer may be copolymerized by any known method, but since it is desired that the product has a satisfactory chiral separation ability, the 1,1-aromatic ring-substituted ethylene polymer part is preferably a block copolymer having also chiral recognition ability. The aforesaid methacrylate ester may be a bulky, polymerized polymer with a spiral structure, and may be a mixture of two or more types. Likewise, two or more 1,1-aromatic ring-substituted ethylene monomers having a polymerizable exomethylene group can also be used together.

To synthesize a block copolymer wherein the 1-1 aromatic ring-substituted ethylene polymer part also has a chiral recognition ability, the monomer to be copolymerized can be added to the other monomer after it has been homopolymerized, and the monomer added later then polymerized. In the present invention, the methacrylate ester is preferably polymerized first, and the 1-1 aromatic ring-substituted ethylene monomer having a polymerizable exomethylene group added later.

If the aforesaid block copolymer is manufactured by anionic polymerization using an anionic polymerization initiator having an optically active alkyl group and/or an anionic polymerization initiator using a chiral ligand, not only the polymethacrylic ester part gives rise to a chiral recognition ability due to its spiral structure, but the polydibenzofulvene derivative part can also be given a chiral recognition ability, and this is preferred.

Examples of the aforesaid anionic polymerization initiator having an optically active alkyl group are represented by 1 and 2 below, and an example of an anionic polymerization initiator concurrently using a chiral ligand is represented by 3 below.

### 1. R*M**

Here, R* is an optically active alkyl group, and M is an alkali metal or an alkaline earth metal. Examples of R*M are (-)-mentoxy potassium and (+)-mentoxy potassium.

### 2. RR*NM and RR*RM

Here, R is an alkyl group, R* is an optically active group, M is an alkali metal or alkaline earth metal, and N is a nitrogen atom. As examples, the following compounds may be mentioned.

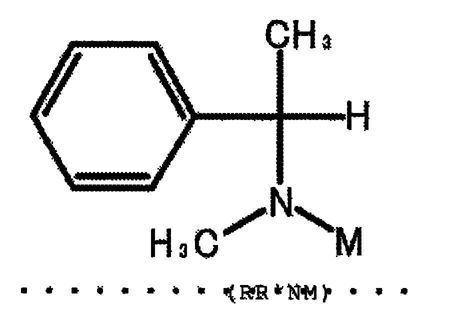

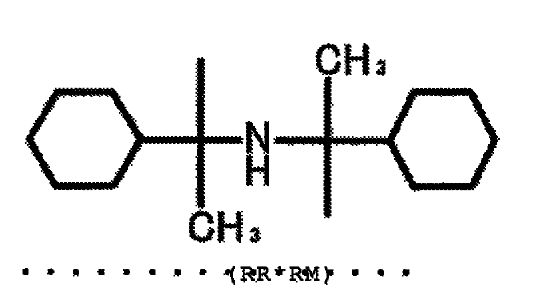

### 3. ROM/chiral ligand, and RM/chiral ligand

Here, R is an alkyl group, O is an oxygen atom, and M is an alkali metal or alkaline earth metal. The chiral ligand is a diamino compound containing an optically active group, wherein this compound may be a bidentate ligand. Examples are (+) - or (-)-spartine, (+)- or (-)-1,4-bis(dimethylamino)-2,3-dimethoxybutane, (+)- or (-)-(1-pyrrolidinylmethyl)pyrrolidine, and (+)-or (-)-(4S)-2,2'-(1-ethylpropylidene)bis[4-(1-phenylethyl)-4,5-dibydrooxazole].

### 4. RM/R'XM' complex

Here, R is an alkyl group, X is oxygen or a nitrogen atom, and M is an alkali metal or alkaline earth metal. R' is an optically active group. M' is an alkali metal or alkaline earth metal identical to or different from M. Examples of R'X are a (+)- or (-)-mentoxy group, 1-phenylethylamino group, 1-naphthylethylamino group, or 2-(1-pyrrolidinylmethyl)pyrrolidine-1-yl group.

One type of the aforesaid anionic polymerization initiator may be used, or several may be used together. When R³, R⁴ in Structural Formula 1, or R³-R¹⁰ in Structural Formula 2, are substituent groups which are not optically active, the use of these anionic polymerization initiators is particularly important. When using a monomer into which an optically active substituent group has been introduced as R³, R⁴ of Structural Formula 1, polymerization may be performed using an ordinary polymerization initiator which is not optically active, but it is preferred here too to use the aforesaid initiator which is optically active.

The molecular weight of the polymer of the present invention is preferably 500-1 million as number average molecular weight. If the molecular weight is 500 or less, ability to withstand solvolysis is poor, and it is difficult to polymerize to 1 million or more. The dispersion degree of molecular weight is preferably 1-3, but particularly preferably 1-2. If the dispersion degree is 3 or more, the chiral separation ability of the polymer when used as the column stationary phase for HPLC (high-speed liquid column chromatography) becomes poorer.

When performing the copolymerization of the present invention, in addition to using the aforesaid methacrylate ester and the aforesaid 1,1-aromatic ring-substituted ethylene monomer having a polymerizable exomethylene group, one, two or more other polymerizable compounds may also be copolymerized therewith. These other polymerizable compounds are preferably compounds capable of anionic polymerisation. As examples of such compounds, there may be mentioned aminoalkyl esters of acrylic acid such as N,N-dimethylaminoethyl acrylate, N,N-diethylaminoethyl acrylate, and N,t-butylaminoethyl acrylate; (meth)acrylonitrile; butadiene; isoprene; vinyl chloride; vinylidene chloride; vinyl acetate; vinyl ketone; N-vinylpyrrolidone; vinyl pyridine; (meth)acrylamide; divinylbenzene; styrene type monomers such as α-methylstyrene, vinyltoluene, chlorostyrene, t-butyl styrene and styrene; fumaric acid; maleic acid; itaconic acid; phthalic acid, monoalkyl esters and dialkyl esters of fumaric acid; monoalkyl esters and dialkyl esters of maleic acid; monoalkyl esters and dialkyl esters of itaconic acid; and monoalkyl esters and dialkyl esters of phthalic acid. In this case also, the copolymer is preferably a block copolymer.
Further, a polymerizable compound having two or more functional groups may be copolymerized. Thereby, physical properties such as resistance to solvents can be improved. Also, a polymerizable compound having a photopolymerizable functional group may be copolymerized, and after polymerization, photoirradiation may be performed to crosslink the polymer.

The chiral copolymer according to the present invention of an ethylene monomer containing a dibenzofulvene derivative with a bulky methacrylate ester, obtained as described above, not only has a superior ability to withstand solvolysis compared with those according to the art, but also has a superior chiral recognition ability, and it is therefore suitable as a chiral stationary phase for supercritical fluid chromatography (SFC) having superior durability, and as a chiral stationary phase for high-speed liquid chromatography,

The chromatography filler for optical isomer separation according to claim 8 may be a powder of the copolymer of the present invention, or a material obtained by covering a granular support surface with the polymer compound of the invention. As main examples, the following can be mentioned.
1. A material obtained by crushing the polymer according to claims 1 and 2 which is preferably insoluble in solvents. It is particularly preferred that the particle size is uniform.
2. A material obtained by supporting the polymer according to claims 1 and 2 on the surface of silica gel or aluminum oxide, or chemically bonding it thereto.
3. A material obtained by supporting the polymer according to claims 1 and 2 on the surface of polystyrene beads, or chemically bonding it thereto.
4. A material obtained by crushing the polymer according to claims 1 and 2 which is insoluble in solvents, and which is supported on the surface of silica gel or aluminum oxide.
   Hereafter, the invention will be described in further detail according to specific examples, but it should be understood that the invention is not to be construed as being limited thereto.

### EXAMPLES

### Example 1

### 1. Preparation of copolymer

The copolymer of the present invention was synthesized under the conditions in the following Table 1, and isolated (Experiment 132-1 in Table 1).
[Table 1]

**Table 1. Block copolymerization of TrMA with DBF in toluene at -78°C using (+)-PMP-FILi**

| | | | Hexane-insol. | | |
|---|---|---|---|---|---|
| Exp# | [TrMA]/[DBF]/[FlLi] | Conversion of DBF (%) (a) | THF-insol (%) | THF-sol. (%) | Hexane-sol. (%) |
| 132-1 | 20/7.5/1 | 91.6 | 0 | 92.4 | 7.7 |
| 132-2 | 30/5/1 | 91.7 | 0 | 91.5 | 8.5 |

| | | | | | |
|---|---|---|---|---|---|
| (a) Determined by ¹H NMR of reaction mixture. | | | | | |

For the aforesaid synthesis, all reactions were performed in a dry nitrogen atmosphere. The specific procedure was as follows.

After frame drying under vacuum, triphenylmethyl methacrylate (TrMA) (3.00 g, 9.18 millimoles) was introduced into a 25 ml glass ampoule in which the atmosphere had been replaced by nitrogen, and deaeration drying was performed for 30 minutes. After replacing the atmosphere in the vessel by nitrogen, 53.1 ml of dry toluene was added to completely dissolve the monomer, and the solution was cooled to -78* *. 59ml of a 0.1 (mole/liter) toluene solution of 9-fluorenyl lithium-(+)-1-(2-pyrrolidinylmethyl)pyrrolidine complex ((+)-PMP-FlLi, [PMP]/[FlLi] = 1.2) (FlLi: 0.459 millimole equivalents) was added as a polymerization initiator, and the polymerization reaction was started. 3 hours after starting polymerization, a little reaction solution was sampled, analyzed by ¹H NMR, and after verifying that the conversion rate of TrMA was 99% or more, 3.20 ml of a toluene solution of dibenzofulvene (DBF) having a concentration of 1.05 (moles/liter) was added (DBF: 3.36 millimole equivalents). 40 hours after addition of DBF, 3ml of methanol was added to stop the polymerization, and after returning the reaction system to room temperature, the reaction mixture was poured into methanol (300 ml) to cause reprecipitation, and the copolymer which is the insoluble fraction was recovered by centrifugal separation. The yield was greater than 99%. The obtained copolymer was solvent-separated by hexane, and 7.7% of a soluble fraction and 92.4% of an insoluble fraction were thereby obtained. All components completely dissolved in tetrahydrofuran (THF).

Separation of condensate:
3.16 g of the polymer insoluble in hexane obtained in Experiment 132-2 of Table 1 was dissolved in THF (approx. 10 ml), dripped into a benzene/hexane (7/3 (v/v)) mixed solution (300 ml), and the insoluble fraction recovered by centrifugal separation. By repeating this procedure 4 times, 0.309 g of the copolymer of the present invention containing approx. 50% condensate was obtained.

### 2. Block copolymer structure

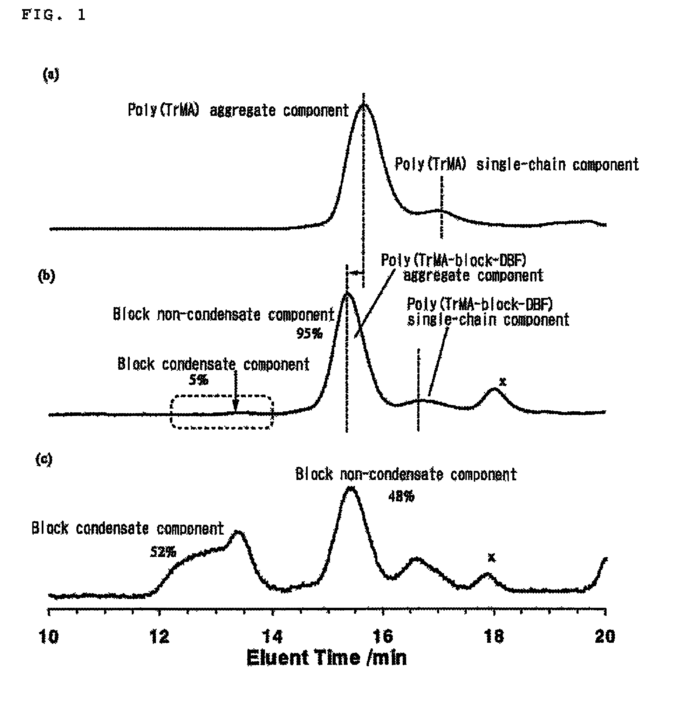

A verification was performed by GPC analysis (solvent = THF, column = TSK G6000HHR and G3000HHR connected in series, flow velocity = 1.0 ml/min). FIG. 1 shows the results for Experiment 132-2. In the prepolymer obtained from a small sample, a single-chain component of poly(TrMA) (Mn: 6,950, Mw/Mn = 1.08 (relative to polystyrene) and an aggregate component (Mn: 19,720, Mw/Mn = 1.07 (relative to polystyrene) were observed ("a" of Fig. 1), but when DBF was added, both peaks were shifted to the higher molecular weight side, (Mn: 7,800, Mw/Mn = 1.07; Mn: 25,580, Mw/Mn = 1.07), the production of a block copolymer (b) was confirmed. In the GPC curve of the block copolymer, about 5% of a condensate component (Mn: 129,800, Mw/Mn = 1.16) of a block copolymer of very high molecular weight was observed. By performing separation with a benzene/hexane (7/3 (v/v)) mixed solvent, a sample (C) containing a high amount (52%) of this condensate component was obtained.

### 3. Ability of withstand to solvents

The ability of the block copolymer of the present invention to withstand solvolysis was evaluated as follows.
6.22 mg of an unseparated block copolymer sample (condensate component, Mn: 222, 600, Mw/Mn = 1.27, contents 5.6%; aggregate component, Mn: 21,900, Mw/Mn = 1.08, content: 43.0%; single-chain component, Mn: 8,200, Mw/Mn = 1.09, content: 51.4%), polymerized from another batch (Experiment 299-3: FlLi-PMP initiator; [TrMA]/DBF] /[Li] = 20/7.5/1) under identical conditions to those of Experiment 132-1, was dissolved in 0.60 ml of deuterated chloroform, and 0.06ml of deuterated methanol was added thereto to give a homogeneous solution. This solution was kept at 60* *, performed solvolysis, and the reaction was traced directly by ¹H NMR (500 MHz). As a comparison, a homopolymer of TrMA (synthesis conditions: initiator = PMP-FlLi; [M]/[I] = 20) (aggregate component, Mn: 17,900, Mw/Mn = 1.04, content: 40.4%; single-chain component, Mn: 6,250, Mw/Mn = 1.09, content: 59.6%) was also subjected to solvolysis and traced by ¹H NMR (500 MHz) under identical conditions. It was confirmed that the homopolymer of TrMA decomposed to a greater extent (Table 2). This proves that the ability of the copolymer of the present invention to withstand solvolysis is higher than that of the TrMA homopolymer.

[Table 2]

**Table 2: Solvolysis of poly (TrMA) and poly(TrMA-block-DBF)**

| Time (min) | Conversion of poly(TrMA) (%) | Conversion of poly(TrtMA-*block*-DBF) (%) |
|---|---|---|
| 5 | 16 | 14 |
| 10 | 21 | 19 |
| 15 | 27 | 22 |
| 20 | 34 | 26 |
| 25 | 43 | 35 |
| 30 | 50 | 41 |
| 35 | 56 | 45 |
| 40 | 64 | 49 |
| 45 | 66 | 53 |
| 50 | 70 | 56 |
| 55 | 74 | 60 |
| 60 | 77 | 62 |

### 4. Preparation of chiral filler, manufacture of column, and evaluation of chiral recognition function

0.309 g of a block copolymer (sample containing 52% of condensate component) insoluble in benzene/hexane (7/3 (v/v)) was dissolved in 5 ml THF, and this was supported on 0.913 g of silica gel treated with diphenyldichlorosilane (DAISO K.K., SP-1000-7) (supported amount of block copolymer: 25.2 mass %; supported amount of polyTrMA component: calculated value = 23.2 mass %). 0.498 g of silica gel on which polymer was supported as described above was filled in a stainless steel HPLC column (0.21 cm (inner diameter) ** 30 cm (length)), and a column having a theoretical number of stages of 2,400 (eluent: methanol, flow velocity: 0.1 ml/min, sample: acetone) was prepared.

When trans-stilbene oxide was separated using the obtained column, the separation factor a was 5.96, which is higher than the reference value of 5.2 for a column prepared with TrMA homopolymer (Okamoto, Hatada, "Chromatographic Chiral Separations", Marcel Dekker, 1988).

### Example 2

Block copolymer (poly (PDBSMA-b-DBF)) having a crosslinked structure prepared from poly-1-phenyldibenzosuberyl methacrylate (PDBSMA) and DBF

### (1) Synthesis

### Synthesis Example of Block Copolymer

Table 3 shows the starting compositions and amounts for each polymerization. The synthesis of YAE615 in Table 3 was performed as follows.
1.71 g (4.82 mmol) of PDBSMA (prior to use, recrystallized from diethylether then benzene, respectively, and vacuum dried in the presence of P₂₀₅ : mp = 157.7-158.3**), was introduced into a frame-dried 100mL ampoule in which the atmosphere had been replaced by nitrogen, and deaerated for 30 minutes. Next, after replacing the atmosphere with nitrogen, 28.1 mL of dry toluene was added to completely dissolve the monomer, the solution was cooled to -78• •, 2.42 mL (0.242 mmol) of a toluene solution containing a complex of 2-(1-pyrrolidinylmethyl)pyrrolidine ((+)-PMP) and fluorenyllithium (FlLi)) (0.1 mol/L), which is an initiator, was added, and the polymerization reaction was continued. After sampling a part of this solution 3 hours after starting polymerization, and confirming by ¹H NMR that the conversion rate of PDBSMA was 99% or more, 2.05 mL (2.42 mmol) of a toluene solution, containing DBF so that a concentration of it is 1.18 mol/L, was added. 40 hours after addition of DBF, a part of this solution was sampled, then, 1 ml of methanol was added to stop the polymerization (conversion rate of DBF: 96.6%). After returning the reaction system to room temperature, it was poured into methanol (200 mL), the polymer was removed by centrifugal separation (3600 rpm, 2 minutes), and separation with solvents was performed using methanol and THF. These solvents were distilled off under reduced pressure, and the product was freeze-dried from benzene. The obtained samples were subjected to NMR, SEC and CD measurements, and the results were analyzed. YF87, shown in Table 3, was also synthesized on a smaller scale in an identical way.

### Synthesis Examples of PDBSMA homopolymer

Kamel54 in Table 3 was synthesized in an identical process to that of the aforesaid block copolymer. As ligand, (+)-2,3-dimethoxy-1,4-bis(dimethylamino)butane (DDB) was used.
[Table **]

**Table 3: starting compositions**

| | [PDBSMA] | [DBF]^{b)} | [Initiator]^{c)} | | Toluene /mL | 1/PDBSMA/DBF |
|---|---|---|---|---|---|---|
| Run | /mmol | /mmol | Ligand | /mmol | | |
| Kame 154 | 0.854 | - | (+)-DDB | 0.043 | 5.29 | 1/20/0 |
| YF87 | 0.846 | 0.423 | (+)-PMP | 0.042 | 4.92 | 1/20/10 |
| YAE615 | 4.82 | 2.416 | (+)-PMP | 0.242 | 28.1 | 1/20/10 |

| | | | | | | |
|---|---|---|---|---|---|---|
| ^{a)}[PDBSMA]₂-0.15 mol/L. ^{b)}[DBF]-0.8-1.1 mol/L. to luena.shr.). ^{c)}0.10 mol/L | | | | | | |

### (2) Spherical aggregate structure of block copolymer

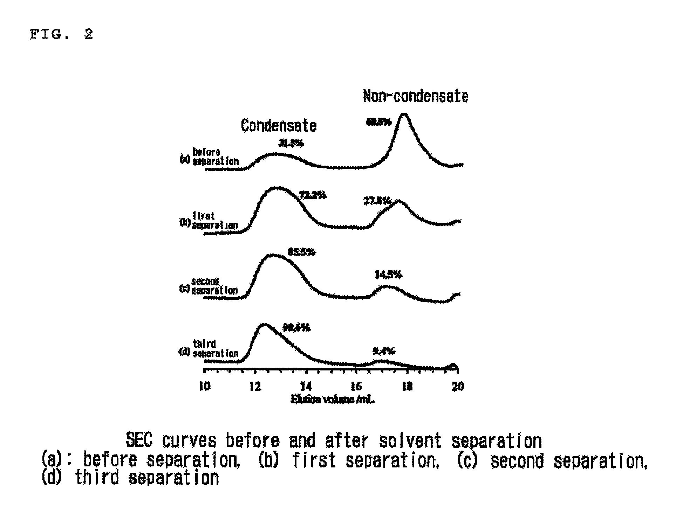

Among the polymer samples obtained in YAE615, the condensate component was isolated by separation with solvents. After completely dissolving 1.7125 g of the polymer obtained in YAE615 into 30mL of benzene, the condensate was deposited by adding 7.5 mL of hexane (benzene/hexane = 8/2 (v/v)). This was subjected to centrifugal separator (3600 rpm, 10 min), and the supernatant liquid was removed by decantation. This procedure was repeated 3 times, giving 0.26202 g of an insoluble fraction (15.3% yield). It was deduced from the SEC curve of FIG. 2 that this insoluble fraction contained 90.6% of condensate.

Next, a THF solution (concentration = 10⁻⁵ mg/mL) of the polymer containing 90% of condensate was cast on a graphite plate, and AFM observation was performed. Spherical structures having a diameter of approx. 50 nm and a height of approx. 13 nm were seen on the observed image. On the other hand, spherical structures were not seen with the homopolymer of poly(PDBSMA), and only filamentous structures were seen. From this result, it was clear that in the block copolymer, spherical condensates were formed by poly(DBF) chains which associate into nuclei, with poly(PDBSMA) chains which order radially around the nuclei.

### (3) Improvement in ability of withstand solvolysis

To study the ability of the withstand solvolysis of the homopolymer poly(PDBSMA) and the block copolymer poly(PDBSMA-b-DBF), the reaction below was carried out in an NMR sample tube and traced. The reaction solvent was CDCl₃/CD₃OD/AcOH = 0.06mL/0.06mL/0.06mL, and the reaction was performed at 60* *.

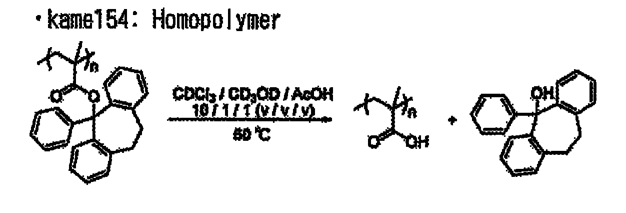

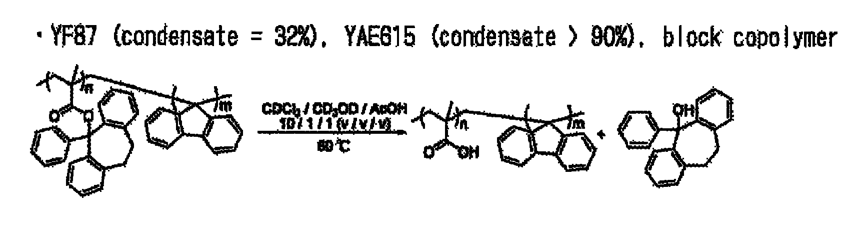

The data of polymers used were as follows.
1. Homopolymer used for comparison (PDBSMA) (Kame154 benzene-hexane (1/1) insoluble fraction: DP = 20): 5.5 mg (1.55* *10⁻² mmol (monomer units))
2. Of the block copolymer poly (PDBSMA-b-DBF) (YF87 (hexane- insoluble): PDBSMA fraction, DP = 20, DBF fraction, DP = 10) of the present invention, the copolymer having a low condensate content (condensate 32%): 6.9 mg (1.55* *10⁻² mmol (monomer units)). This is the number of moles (identified by NMR) of PDBSMA monomer units in the block polymer.
3. Of the block copolymer poly(PDBSMA-b-DEF) (YALE615:PDBSMA fraction, DP = 20, DBF fraction, DP = 10) of the present invention, the copolymer having a high condensate content (condensate>90%): 6.54 mg (1.55 * *10⁻² mmol (monomer units)). This is the number of moles (identified by NMR) of the PDBSMA monomer units in the block polymer.
   In all cages, DP was calculated from the preparation ratio.

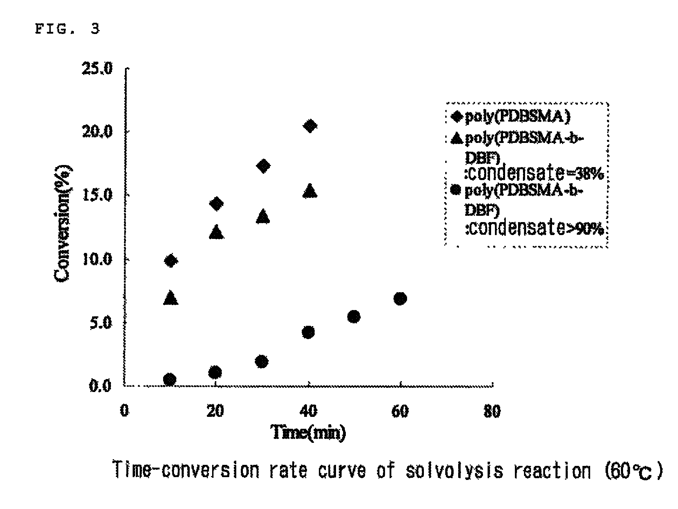

The results are as shown in the following Table 4 and FIG. 3.
When the reaction time is 40 minutes, whereas the homopolymer decomposes by about 20%, the block copolymer decomposes by only 15-4%. In particular, a block copolymer having a high condensate content decomposes by only 4%, thus confirming that conversion to a block copolymer and forming a condensate of the block copolymer is an effective means to improve the ability of the polymer to withstand solvolysis.

**Table 4 :**

| | Conversion rate (progress of solvolysis) | | |
|---|---|---|---|
| Time (min) | Homopolymer (KAME154Hba) (%) | Block copolymer (YF87. condensate content=32%) (%) | Block copolymer (YAE615, condensate content>90%) (%) |
| 10 | 9,9 | 7.0 | 0.4 |
| 20 | 14.4 | 12.2 | 1.1 |
| 30 | 17.3 | 13.4 | 1.9 |
| 40 | 20.5 | 15.4 | 4.2 |
| 50 | | | 5.4 |
| 60 | | | 6.9 |

### (4) Asymmetry recognition ability

A block copolymer poly(PDBSMA-b-DBF) (YAE615) having a condensate content of 90% or more, was supported on silica gel which had been surface-treated with dichlorodiphenylsilane to prepare a chiral stationary phase for HPLC. 15.7 wt% of the PDBSMA fraction, which corresponds to 19.9 wt% of the whole polymer, was supported on the silica gel. This was filled into a stainless steel column of width 0.21 cm and length 25 cm to obtain a column having a theoretical stage number of 1370. This column divided 1,1-bi-2-naphthol with a separation degree α = 1.45 (eluent: methanol/water = 9/1 (v/v)).

### Industrial applicability

The copolymer of an ethylene monomer containing a dibenzofulvene derivative with a bulky methacrylate ester of the present invention not only has a greater ability to withstand solvolysis than those of the prior art, but also has a higher chiral recognition ability, so it is suitable as a chiral stationary phase for supercritical fluid chromatography (SFC) having superior durability, and as a chiral stationary phase for high-speed liquid chromatography.

## Claims

1. An optically active copolymer represented by the following Structural Formula 1, obtained by copolymerizing a bulky methacrylate ester which gives a spiral polymer when homopolymerization is performed, with a 1,1-aromatic ring-substituted ethylene monomer having a polymerizable exomethylene group:
Structural Formula 1: 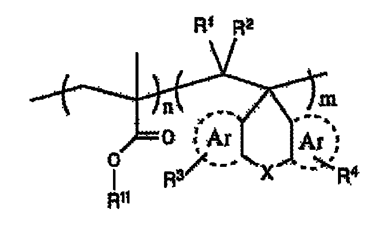
where, Ar in the formula is an aromatic ring, R¹ and R² are hydrogen atoms, organic groups or hetero atoms. R³ and R⁴ are hydrogen atoms, hetero atoms or organic groups and 2-4 thereof may be introduced respectively. In this case, each R³ and R⁴ may be identical or different, respectively. R¹¹ is a triarylmethyl group which may have a crosslinked structure. m and n are integers equal to 1 or more, -X- is a group of - (CH₂)q-, an aromatic group, a vinyl group, a hetero atom or a group containing a hetero atom, and q is an integer equal to 0 or more. X may be all identical or different.

2. The optically active copolymer according to claim 1, wherein said polymer is represented by the following Structural Formula 2.
Structural Formula 2: 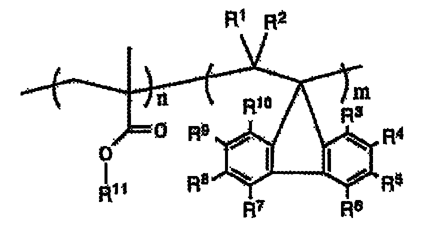 where, R¹, R², R¹¹, m and n are all identical to those of Structural formula 1, and R³-R¹⁰ are identical to R³, R⁴ of Structural Formula 1.

3. The optically active copolymer according to claim 1 or 2, wherein said copolymer has a block structure.

4. The optically active copolymer according to claim 1 or 2, wherein said R¹¹ is a triphenylmethyl group or a triarylmethyl group which has a crosslinked structure in a side chain.

5. A method of manufacturing an optically active copolymer represented by the following Structural Formula 1, wherein, after polymerizing at least one type of bulky methacrylate ester which gives a spiral polymer when polymerization is performed, at least one type of 1, 1-aromatic ring-substituted ethylene monomer having a polymerizable exomethylene group is added, and polymerized to give a block copolymer.
Structural Formula 1: 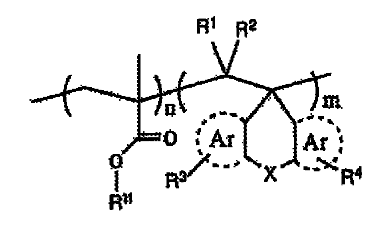 where, Ar in the formula is an aromatic ring, R¹ and R² are hydrogen atoms, organic groups or hetero atoms. R³ and R⁴ are hydrogen atoms, hetero atoms or organic groups, and 2-4 thereof may be introduced respectively. In this case, R³ and R⁴ may be identical or different. R¹¹ is a triarylmethyl group which may have a crosslinked structure. m and n are integers equal to 1 or more, -X-is a group of -(CH₂)q-, an aromatic group, a vinyl group, a hetero atom or a group containing a hetero atom, and q is an integer equal to 0 or more. X may be all identical or different, but must contain at least one dibenzofulvene part in the molecule.

6. The method of manufacturing an optically active copolymer according to claim 5, wherein said block copolymerization is performed by anionic polymerization.

7. The method of manufacturing an optically active copolymer according to claim 6, wherein an initiator having an optically active alkyl group and/or a chiral ligand is used as an initiator of said anionic polymerization.

8. A filler for optical isomer separation chromatography, wherein said filler is manufactured using the optically active copolymer according to claim 1 or 2.
